# EUROPEAN PATENT APPLICATION

(11) **EP 4 640 774 A1**
(43) Date of publication of application: **29.10.2025**
(21) Application number: 23906663.2
(22) Date of filing: 01.12.2023
(51) Int. Cl.: C09D 123/26, C08K 5/29, C08L 23/26, C08L 71/00, C08L 71/02, C08L 101/06, C09D 11/10, C09D 11/104, C09D 11/106, C09D 123/28, C09D 133/08, C09D 133/10, C09D 167/00, C09D 169/00, C09D 171/00, C09J 127/22, C09J 127/24

(54) **MODIFIED POLYOLEFIN RESIN COMPOSITION AND USE OF SAME**

(30) Priority: 21.12.2022 JP 2022204552
(71) Applicant: TOYOBO MC Corporation, Osaka-shi, Osaka 530-0001 (JP)
(72) Inventor: MIYAZAKI, Keitaro, Takasago-shi, Hyogo 676-0082 (JP); KASHIHARA, Kenji, Takasago-shi, Hyogo 676-0082 (JP)
(74) Representative: Vossius & Partner Patentanwälte Rechtsanwälte mbB
(86) International application number: PCT/JP2023/043132
(87) International publication number: WO 2024/135295

(57) **Abstract**

The present invention provides a modified polyolefin resin composition comprising an acid-modified polyolefin resin (A), a polyetheramine (B), and a polyol component (C).

## Description

### Technical Field

The present invention relates to a modified polyolefin resin composition and use of the resin composition.

### Background Art

Conventionally, polypropylene, polyethylene, ethylene-propylene copolymers, ethylene-propylene-diene copolymers, polybutene, poly(4-methyl-1-pentene), and other polyolefin resins are used in the fields of automotive parts, electrical parts, building materials, packaging films, and the like because they are relatively inexpensive and have excellent properties, such as chemical resistance, water resistance, and heat resistance.

On the other hand, polyolefin resins are difficult to paint, bond, or the like because they are crystalline and nonpolar.

Accordingly, chlorinated polyolefins, which have strong adhesion to polyolefin resins, are widely used as binder resins (e.g., PTL 1 and 2).

In order to improve the adherence properties (adhesion) of chlorinated polyolefins to substrates or to compensate for the disadvantage of limited adhesion targets of chlorinated polyolefins, mixtures of chlorinated polyolefins with acrylic, urethane, or polyester resins, and binder compositions in which these resins are graft-polymerized onto chlorinated polyolefins, are also widely used (see PTL 3 and 4).

However, these mixtures and binder compositions are generally used dissolved in organic solvents, such as toluene and xylene, and therefore large amounts of organic solvents are released into the atmosphere during application, which is undesirable from the viewpoint of the environment, hygiene, etc. Furthermore, these mixtures and binder compositions had problems with poor fluidity and adhesion to polyolefin substrates.

PTL 5 discloses a solvent-free in-mold coating composition for thermoplastic substrates, containing an acrylic modified polyolefin, a reactive monomer and/or a reactive oligomer, and a radical polymerization initiator at a specific ratio.

However, the composition of PTL 5 requires the use of a large amount of solvent in the production process and the removal of the solvent; thus, there is room for improvement from the viewpoints of the environment, hygiene, etc. Furthermore, the composition disclosed in PTL 5 had problems with poor fluidity and adhesion to polyolefin substrates.

### Citation List

### Patent Literature

PTL 1: JPS59-75958A
PTL 2: JPS60-99138A
PTL 3: JPH06-16746A
PTL 4: JPH08-12913A
PTL 5: JP2002-249680A

### Summary of Invention

### Technical Problem

The present invention was made in consideration of the above, and an object thereof is to provide a modified polyolefin resin composition having sufficient fluidity within a specific temperature range and having sufficient adhesion to polyolefin substrates.

### Solution to Problem

As a result of repeated research on dispersing and/or dissolving an acid-modified polyolefin resin in a polyol in order to achieve the above object, the present inventors found that the object can be achieved by a modified polyolefin resin composition comprising an acid-modified polyolefin resin, a polyetheramine, and a polyol. Thus, the present invention has been accomplished.

The present invention encompasses, for example, the subject matter set forth in the following item.

Item 1. A modified polyolefin resin composition comprising an acid-modified polyolefin resin (A), a polyetheramine (B), and a polyol component (C).

### Advantageous Effects of Invention

The modified polyolefin resin composition of the present invention has sufficient fluidity within a specific temperature range and has sufficient adhesion to polyolefin substrates. The modified polyolefin resin composition of the present invention exhibits sufficient fluidity within a specific temperature range, and thus can be suitably used as a liquid modified polyolefin resin composition for various applications.

### Description of Embodiments

Preferred embodiments of the present invention will be described in detail below. The following description of the constituent requirements may be based on representative embodiments and specific examples; however, the present invention is not limited to such embodiments.

In the present specification, the terms "comprise" and "contain" include the concepts of comprising, containing, consisting essentially of, and consisting of.

In the numerical ranges described in stages in the present specification, the upper or lower limit value of a numerical range of a certain stage can be arbitrarily combined with the upper or lower limit value of a numerical range of another stage. In any numerical range described in the present specification, the upper or lower limit value of the numerical range may be replaced with a value shown in the Examples or a value that can be unambiguously derived from the Examples. Furthermore, in the present specification, a numerical value connected with "to" means a numerical range including the numerical values before and after "to" as the lower and upper limit values.

In the present specification, "A and/or B" means "one of A and B" or "both A and B," specifically, "A," "B," or "A and B."

In the present specification, "(meth)acrylic" refers to acrylic or methacrylic, and "(meth)acrylate" refers to acrylate or methacrylate.

### Modified Polyolefin Resin Composition

The modified polyolefin resin composition of the present invention comprises, as essential components, an acid-modified polyolefin resin (A), a polyetheramine (B), and a polyol component (C).

The modified polyolefin resin composition of the present invention generally has sufficient fluidity within the range of 25°C or higher and 80°C or lower. In the present specification, resin compositions with fluidity refer to, for example, uniform liquid compositions that do not contain coarse resin particles, aggregates, etc.

The modified polyolefin resin composition of the present invention is generally a resin composition that flows when placed in a glass bottle and tilted within the range of 25°C or higher and 80°C or lower. In the present invention, resin compositions with fluidity generally also include resin compositions that flow upon receiving mechanical shear within the range of 25°C or higher and 80°C or lower.

As an embodiment of the present invention, the total content ratio of the acid-modified polyolefin resin (A), the polyetheramine (B), and the polyol component (C) to the total mass of the modified polyolefin resin composition is preferably in the order of more than 50 mass%, 55 mass% or more, 60 mass% or more, 65 mass% or more, 70 mass% or more, 75 mass% or more, 80 mass% or more, 85 mass% or more, 90 mass% or more, 92.5 mass% or more, 95 mass% or more, 97.5 mass% or more, 99 mass% or more, 99.5 mass% or more, 99.9 mass% or more, 99.95 mass% or more, and 99.99 mass% or more.

### Acid-Modified Polyolefin Resin (A)

The present invention comprises an acid-modified polyolefin resin (A). The acid-modified polyolefin resin (A) is a polymer obtained by graft-polymerization of an α,β-unsaturated carboxylic acid or an acid anhydride thereof onto a polyolefin.

Examples of polyolefins include homopolypropylene (a propylene homopolymer), a propylene-α-olefin copolymer, homopolyethylene (an ethylene homopolymer), an ethylene-α-olefin copolymer, poly-1-butene, a 1-butene-α-olefin copolymer, and the like. These polyolefins can be used alone or in a combination of two or more. Preferred among these polyolefins are homopolypropylene and/or a propylene-α-olefin copolymer.

The propylene-α-olefin copolymer refers to a copolymer of propylene and an α-olefin. Examples of α-olefins include ethylene and α-olefins having 4 to 20 (4, 5, 6, 7, 8, 9, 10, 11, 12, 13, 14, 15, 16, 17, 18, 19, or 20) carbon atoms, such as 1-butene, isobutene, 1-pentene, 4-methyl-1-pentene, 1-hexene, 1-heptene, 1-octene, 1-decene, 1-dodecene, 1-tetradecene, 1-hexadecene, 1-octadecene, and 1-eicosene. These α-olefins can be used alone or in a combination of two or more.

The content of the propylene component in the propylene-α-olefin copolymer is preferably 50 mol% or more, more preferably 60 mol% or more, and even more preferably 70 mol% or more. When the content of the propylene component in the propylene-α-olefin copolymer is 50 mol% or more, the adhesion of the modified polyolefin resin composition of the present invention to polyolefin substrates (particularly polypropylene substrates) is further improved.

The ethylene-α-olefin copolymer refers to a copolymer of ethylene and an α-olefin. Examples of α-olefins include α-olefins having 3 to 20 (3, 4, 5, 6, 7, 8, 9, 10, 11, 12, 13, 14, 15, 16, 17, 18, 19, or 20) carbon atoms, such as propylene, 1-butene, isobutene, 1-pentene, 4-methyl-1-pentene, 1-hexene, 1-heptene, 1-octene, 1-decene, 1-dodecene, 1-tetradecene, 1-hexadecene, 1-octadecene, and 1-eicosene. These α-olefins can be used alone or in a combination of two or more.

The content of the ethylene component in the ethylene-α-olefin copolymer is preferably 75 mol% or more. When the content of the ethylene component in the ethylene-α-olefin copolymer is 75 mol% or more, the adhesion of the modified polyolefin resin composition of the present invention to polyolefin substrates (particularly polyethylene substrates) is further improved.

The 1-butene-α-olefin copolymer refers to a copolymer of 1-butene and an α-olefin. Examples of α-olefins include ethylene, propylene, and α-olefins having 5 to 20 (5, 6, 7, 8, 9, 10, 11, 12, 13, 14, 15, 16, 17, 18, 19, or 20) carbon atoms, such as 1-pentene, 4-methyl-1-pentene, 1-hexene, 1-heptene, 1-octene, 1-decene, 1-dodecene, 1-tetradecene, 1-hexadecene, 1-octadecene, and 1-eicosene. These α-olefins can be used alone or in a combination of two or more.

The content of the 1-butene component in the 1-butene-α-olefin copolymer is preferably 65 mol% or more. When the content of the 1-butene component in the 1-butene-α-olefin copolymer is 65 mol% or more, the adhesion of the modified polyolefin resin composition of the present invention to polyolefin substrates (particularly polypropylene substrates or poly-1-butene substrates) is further improved.

Examples of the α,β-unsaturated carboxylic acid or the acid anhydride thereof to be graft-polymerized onto a polyolefin include maleic acid, maleic anhydride, fumaric acid, citraconic acid, citraconic anhydride, mesaconic acid, itaconic acid, itaconic anhydride, aconitic acid, aconitic anhydride, himic anhydride, and the like. Preferred among these α,β-unsaturated carboxylic acids or acid anhydrides thereof are maleic acid, maleic anhydride, and itaconic anhydride; and more preferred are maleic acid and maleic anhydride.

The total content of the α,β-unsaturated carboxylic acid and anhydride component thereof in the acid-modified polyolefin resin (A) is preferably 0.5 to 10 mass%, more preferably 0.7 to 7.5 mass%, even more preferably 0.8 to 3 mass%, and still more preferably 1.0 to 2.0 mass%. When the total content of the α,β-unsaturated carboxylic acid and anhydride component thereof in the acid-modified polyolefin resin (A) is within the range of 0.5 to 10 mass%, the fluidity of the modified polyolefin resin composition of the present invention is further improved.

Known methods can be widely used to graft-polymerize an α,β-unsaturated carboxylic acid or an anhydride thereof onto a polyolefin. Examples of such methods include a method of reacting a polyolefin by heating and melting it at a temperature equal to or higher than the melting point in the presence of a radical generator (melting method), and a method of dissolving a polyolefin in an organic solvent, followed by reaction by heating and stirring in the presence of a radical generator (solution method) .

In the present invention, the acid-modified polyolefin resin (A) may be an acid-modified chlorinated polyolefin resin that has been further chlorinated. As the method of chlorination, for example, chlorine gas is blown into an acid-modified polyolefin resin to introduce chlorine atoms. More specifically, chlorination can be carried out by dispersing or dissolving an acid-modified polyolefin resin in a solvent as required, then blowing chlorine gas thereinto in the presence of a catalyst or under ultraviolet irradiation, under elevated or normal pressure in a temperature range of 50 to 150°C.

Examples of the solvent used in chlorination include water and chlorinated solvents (e.g., chloroform, methylene chloride, and carbon tetrachloride), with chlorinated solvents being preferred. The chlorinated solvent may be distilled off under reduced pressure at the end of chlorination, or may be replaced with another organic solvent.

Examples of the catalyst used in chlorination include radical initiators. Examples of radical initiators include tert-butyl peroxy-2-ethylhexanoate, tert-butyl peroxyoctoate, di-tert-butyl peroxide, dicumyl peroxide, and the like.

When the acid-modified polyolefin resin (A) is chlorinated, the chlorine content of the acid-modified chlorinated polyolefin resin is preferably 5 mass% or more, more preferably 8 mass% or more, even more preferably 10 mass% or more, particularly preferably 12 mass% or more, and most preferably 14 mass% or more. When the chlorine content of the acid-modified chlorinated polyolefin resin is 5 mass% or more, the solution stability is better, facilitating the emulsification of the acid-modified chlorinated polyolefin resin. Further, the chlorine content of the acid-modified chlorinated polyolefin resin is preferably 40 mass% or less, more preferably 38 mass% or less, even more preferably 35 mass% or less, particularly preferably 32 mass% or less, and most preferably 30 mass% or less. When the chlorine content of the acid-modified chlorinated polyolefin resin is 40 mass% or less, the crystallinity of the acid-modified chlorinated polyolefin is increased, and the adhesion is further improved.

When the acid-modified polyolefin resin (A) is chlorinated, the chlorine content of the acid-modified chlorinated polyolefin resin is preferably 5 mass% or more and 40 mass% or less, more preferably 8 mass% or more and 38 mass% or less, even more preferably 10 mass% or more and 35 mass% or less, still more preferably 12 mass% or more and 32 mass% or less, and particularly preferably 14 mass% or more and 30 mass% or less.

The chlorine content of the acid-modified chlorinated polyolefin resin can be measured in accordance with JIS K-7229-1995. Specifically, the chlorine content can be measured using the "oxygen flask combustion method," in which the acid-modified chlorinated polyolefin resin is burned in an oxygen atmosphere, the generated chlorine gas is absorbed with water, and the chlorine content is determined by titration.

The melting point of the acid-modified polyolefin resin (A) is preferably 90°C or lower, more preferably 85°C or lower, and particularly preferably 80°C or lower. When the melting point of the acid-modified polyolefin resin (A) is 90°C or lower, the adhesion to polyolefin substrates is improved.

The melting point of the acid-modified polyolefin resin (A) is preferably 50°C or higher, more preferably 55°C or higher, and particularly preferably 60°C or higher. When the melting point of the acid-modified polyolefin resin (A) is 50°C or higher, the adhesion to polyolefin substrates is improved.

The melting point of the acid-modified polyolefin resin (A) can be measured with a differential scanning calorimeter (DSC) in accordance with JIS K7121-2012. Specifically, with a DSC meter, about 5 mg of a sample is maintained in a heated and melted state at 150°C for 10 minutes and then cooled at a rate of 10°C/minute until the sample is stabilized and maintained at - 50°C. Thereafter, the sample is further heated at a rate of 10°C/minute to 150°C, and the peak melting temperature at which the sample is melted is measured and evaluated as the melting point.

The weight average molecular weight (Mw) of the acid-modified polyolefin resin (A) is preferably 3000 to 200000, more preferably 10000 to 150000, even more preferably 20000 to 120000, still more preferably 30000 to 100000, and particularly preferably 40000 to 90000. When the weight average molecular weight (Mw) of the acid-modified polyolefin resin (A) is within the range of 3000 to 200000, good fluidity is ensured. In addition, when the Mw is within the range of 3000 to 200000, the cohesive force of the acid-modified polyolefin resin (A) is further improved, and the adhesive force is further improved. The weight average molecular weight (Mw) of the acid-modified polyolefin resin (A) can be measured by gel permeation chromatography (GPC). The specific measurement method will be explained in the Examples described below.

The acid-modified polyolefin resin (A) may be further copolymerized with a radically polymerizable monomer as long as the effects of the present invention are not impaired. The content of the radically polymerizable monomer is generally 20 parts by mass or less, preferably 10 parts by mass or less, more preferably 5 parts by mass or less, and even more preferably 1 part by mass or less, per 100 parts by mass of the acid-modified polyolefin resin (A).

The form in which the acid-modified polyolefin resin (A) is copolymerized with a radically polymerizable monomer is not limited. Examples of the form of copolymerization include random copolymerization, block copolymerization, graft copolymerization (graft modification), and the like.

Examples of radically polymerizable monomers include (meth)acrylic compounds, vinyl compounds, and the like. (Meth)acrylic compounds refer to compounds containing at least one (meth)acryloyl group (an acryloyl group and/or a methacryloyl group) in the molecule.

Examples of radically polymerizable monomers include (meth)acrylic acid, methyl (meth)acrylate, ethyl (meth)acrylate, n-butyl (meth)acrylate, cyclohexyl (meth)acrylate, hydroxyethyl (meth)acrylate, isobornyl (meth)acrylate, glycidyl (meth)acrylate, octyl (meth)acrylate, lauryl (meth)acrylate, tridecyl (meth)acrylate, stearyl (meth)acrylate, cyclohexyl (meth)acrylate, benzyl (meth)acrylate, phenyl (meth)acrylate, dimethylaminoethyl (meth)acrylate, diethylaminoethyl (meth)acrylate, hydroxyethyl (meth)acrylate, 2-hydroxyethyl (meth)acrylate, N,N-dimethylaminoethyl (meth)acrylate, acetoacetoxyethyl (meth)acrylate, N-methyl(meth)acrylamide, N-ethyl(meth)acrylamide, N-propyl(meth)acrylamide, N-isopropyl(meth)acrylamide, N-butyl(meth)acrylamide, N-isobutyl(meth)acrylamide, N-t-butyl(meth)acrylamide, N,N-dimethyl(meth)acrylamide, N,N-dimethylaminopropyl(meth)acrylamide, N,N-methylene-bis(meth)acrylamide, N-methylol(meth)acrylamide, hydroxyethyl(meth)acrylamide, (meth)acryloylmorpholine, n-butyl vinyl ether, 4-hydroxybutyl vinyl ether, and dodecyl vinyl ether. Preferred among these are methyl (meth)acrylate, ethyl (meth)acrylate, cyclohexyl (meth)acrylate, and lauryl (meth)acrylate; and more preferred are these methacrylates, i.e., methyl methacrylate, ethyl methacrylate, cyclohexyl methacrylate, and lauryl methacrylate. These radically polymerizable monomers can be used alone or in a combination of two or more.

In the present invention, the content of the acid-modified polyolefin resin (A) is preferably 5 to 60 parts by mass, more preferably 10 to 40 parts by mass, even more preferably 15 to 35 parts by mass, and still more preferably 18 to 30 parts by mass, per 100 parts by mass of the modified polyolefin resin composition, in terms of better maintenance of the fluidity of the modified polyolefin resin composition and further improvement of the adhesion to polyolefin substrates.

In the present invention, the content of the acid-modified polyolefin resin (A) is generally 5 to 100 parts by mass, preferably 10 to 90 parts by mass, more preferably 12.5 to 80 parts by mass, even more preferably 15 to 70 parts by mass, still more preferably 20 to 60 parts by mass, and particularly preferably 25 to 50 parts by mass, per 100 parts by mass of the polyol component (C), in terms of better maintenance of the fluidity of the modified polyolefin resin composition and further improvement of the adhesion to polyolefin substrates.

### Polyetheramine (B)

The present invention comprises a polyetheramine (B). The polyetheramine (B) is generally a compound having a polyether chain and an amino group.

In the present invention, the polyetheramine (B) has a polyether chain, and the polyether chain preferably has a structure comprising at least one selected from the group consisting of:
a chain represented by -(O-CH₂CH₂)x-, wherein x is an integer of 2 to 120,
a chain represented by - (O-CH₂CH(CH₃))y₁-, wherein y₁ is an integer of 2 to 90,
a chain represented by -(O-CH₂CH₂CH₂)y₂-, wherein y₂ is an integer of 2 to 90,
a chain represented by -(O-CH₂CH₂CH₂CH₂)z₁-, wherein z₁ is an integer of 2 to 80,
a chain represented by -(O-CH(CH₃)CH₂CH₂)z₂-, wherein z₂ is an integer of 2 to 80,
a chain represented by -(O-CH₂CH(CH₃)CH₂)z₃-, wherein z₃ is an integer of 2 to 80, and
a chain represented by - (O-CH₂CH₂CH(CH₃))z₄-, wherein z₄ is an integer of 2 to 80.

In the present invention, the polyetheramine (B) has a polyether chain, and the polyether chain more preferably has a structure comprising at least one selected from the group consisting of:
a chain represented by -(O-CH₂CH₂)x-, wherein x is an integer of 2 to 120,
a chain represented by -(O-CH₂CH(CH₃))y₁-, wherein y₁ is an integer of 2 to 90, and
a chain represented by -(O-CH₂CH₂CH₂CH₂)z₁-, wherein z₁ is an integer of 2 to 80.

In the present invention, the polyetheramine (B) preferably has a primary amino group or a secondary amino group at one end thereof, and the polyetheramine (B) preferably has a weight average molecular weight (Mw) of 200 to 50000.

In the present invention, the polyetheramine (B) more preferably has a primary amino group or a secondary amino group at one end thereof, and the polyetheramine (B) more preferably has a weight average molecular weight (Mw) of 200 to 5000.

In the present invention, the polyetheramine (B) even more preferably has a primary amino group at one end thereof, and the polyetheramine (B) even more preferably has a weight average molecular weight (Mw) of 500 to 5000.

In the present invention, from the viewpoint of stably dissolving and/or dispersing the acid-modified polyolefin resin (A) in the polyol component (C), the polyetheramine (B) is generally a polymer compound having a weight average molecular weight (Mw) within the range of 200 to 50000. When the Mw of the polyetheramine (B) is within this range, the steric repulsion of the polyetheramine (B) in the polyol component (C) is likely to increase, which makes it possible to stably disperse and/or dissolve the acid-modified polyolefin resin (A) in the polyol component (C).

In the present invention, the weight average molecular weight (Mw) of the polyetheramine (B) is generally 200 to 50000, preferably 300 to 20000, more preferably 350 to 10000, even more preferably 450 to 7000, and particularly preferably 500 to 5000.

The weight average molecular weight (Mw) of the polyetheramine (B) in the present invention can be measured by GPC and converted from the calibration curve of polystyrene. The GPC measurement is carried out by a conventionally known method using a commercially available device with THF or the like as a solvent.

In the present invention, the HLB value of the polyetheramine (B) is preferably 2 to 19, more preferably 5 to 18, and even more preferably 8 to 17. When the HLB value is within the range of 2 to 19, good fluidity can be maintained.

In the present invention, the HLB value is a value that indicates the degree of hydrophilicity or lipophilicity (hydrophobicity) of the polyetheramine (B), and can be determined by the Griffin method represented by the following formula (1): HLB value = 20 x total formula weight of hydrophilic part/molecular weight

The polyetheramine (B) can be bonded to the acid-modified polyolefin resin (A) by various reaction forms. Examples of such reaction forms include reaction forms that form covalent and/or ionic bonds. More specific examples include an amidation reaction between the carboxylic anhydride group and the primary or secondary amino group, an imidization reaction, and a neutralization reaction between the carboxylic acid group and the primary or secondary amino group.

As the polyetheramine (B), known commercial products can be widely used. Examples of commercial products of the polyetheramine (B) include the following manufactured by Huntsman:
Jeffamine M-600 (MW = 600, HLB value = 2.1),
Jeffamine M-1000 (MW = 1000, HLB value = 16.1),
Jeffamine M-2005 (MW = 2000, HLB value = 2.7),
Jeffamine M-2070 (MW = 2000, HLB value = 13.8),
Jeffamine M-3085 (MW = 3000, HLB value = 16.8),
Jeffamine D-230 (MW = 230, HLB value = 3.6),
Jeffamine D-400 (MW = 430, HLB value = 1.7),
Jeffamine D-2000 (MW = 2000, HLB value = 0.3),
Jeffamine D-4000 (MW = 4000, HLB value = 0.2),
Jeffamine ED-600 (MW = 600, HLB value = 13.4),
Jeffamine ED-900 (MW = 900, HLB value = 12.5), and
Jeffamine ED-2003 (MW = 2000, HLB value = 16.7).
These commercial products can be used alone or in a combination of two or more.

In the present invention, the content of the polyetheramine (B) is generally 5 to 100 parts by mass, preferably 10 to 90 parts by mass, more preferably 12.5 to 80 parts by mass, even more preferably 15 to 70 parts by mass, still more preferably 20 to 60 parts by mass, and particularly preferably 25 to 50 parts by mass, per 100 parts by mass of the acid-modified polyolefin resin (A), in terms of better maintenance of the fluidity of the modified polyolefin resin composition and further improvement of the adhesion to polyolefin substrates.

In the present invention, the content of the polyetheramine (B) is preferably 1 to 40 parts by mass, more preferably 1.5 to 30 parts by mass, even more preferably 2 to 20 parts by mass, and still more preferably 3 to 15 parts by mass, per 100 parts by mass of the modified polyolefin resin composition, in terms of better maintenance of the fluidity of the modified polyolefin resin composition and further improvement of the adhesion to polyolefin substrates.

### Polyol Component (C)

The present invention comprises a polyol component (C). The polyol component (C) generally comprises a polyol (a compound having two or more hydroxyl groups per molecule). The polyol component (C) is generally a reactive component that can be used as a resin for forming a coating film. For example, the polyol component (C) reacts with a curing agent by heating to form a three-dimensional cured coating film.

As an embodiment of the present invention, the polyol component (C) preferably comprises a single polyol component (C) or two or more polyol components (C) with different hydroxyl values, and more preferably a single polyol component (C) or two polyol components (C) with different hydroxyl values.

As another embodiment of the present invention, the polyol component (C) preferably consists of a single polyol or two or more polyols with different hydroxyl values, and more preferably consists of a single polyol or two polyol components with different hydroxyl values. A single polyol component (C) or two polyol components (C) with different hydroxyl values may be contained.

The polyol component (C) preferably comprises at least one polyol selected from the group consisting of polyether polyols, polyester polyols, polyacrylate polyols, polycaprolactone polyols, polycarbonate polyols, castor oil-modified polyols, polyolefin polyols, and polyhydric alcohols.

The polyol component (C) more preferably comprises at least one polyol selected from the group consisting of polyether polyols, polyester polyols, polyacrylate polyols, polycaprolactone polyols, polycarbonate polyols, and polyhydric alcohols.

The polyol component (C) even more preferably comprises at least one polyol selected from the group consisting of polyether polyols, polyester polyols, polycaprolactone polyols, polycarbonate polyols, and polyhydric alcohols.

The polyol component (C) still more preferably comprises at least one polyol selected from the group consisting of polypropylene glycols, polyester polyols, polyacrylate polyols, polycaprolactone polyols, polycarbonate polyols, and polyhydric alcohols.

The polyol component (C) particularly preferably comprises:
a single polyether polyol;
two or more polyether polyols with different hydroxyl values;
a polyether polyol and a polyester polyol;
a polyether polyol and a polycaprolactone polyol;
a polyether polyol and a polycarbonate polyol; or
a polyether polyol and a polyhydric alcohol.

The polyol component (C) most preferably comprises:
a single polypropylene glycol;
two or more polypropylene glycols with different hydroxyl values;
a polypropylene glycol and a polyester polyol;
a polypropylene glycol and a polycaprolactone polyol;
a polypropylene glycol and a polycarbonate polyol; or
a polypropylene glycol and a polyhydric alcohol.

### Polyether Polyol

The polyol component (C) may contain a polyether polyol. Examples of polyether polyols include polyethylene glycol, polypropylene glycol, polytetramethylene glycol, and block copolymers thereof. These can be used alone or in a combination of two or more.

The polyether polyol is preferably at least one selected from the group consisting of polyethylene glycol, polypropylene glycol, and polytetramethylene glycol. The polyether polyol is more preferably polypropylene glycol.

The polyether polyol can be prepared, for example, by adding ethylene oxide and/or propylene oxide to a polyhydric alcohol compound. In this way, a polyether polyol having two, three, or more hydroxyl groups in one molecule can be prepared.

As commercially available polyether polyols, known commercial products can be widely used. Examples of commercially available polyether polyols include Sanix PP-200 (Mn = 200, hydroxyl value = 560 mgKOH/g), Sanix PP-400 (Mn = 400, hydroxyl value = 280 mgKOH/g), Sanix PP-600 (Mn = 600, hydroxyl value = 187 mgKOH/g), Sanix PP-1000 (Mn = 1000, hydroxyl value = 112 mgKOH/g), Sanix GP-250 (Mn = 250, hydroxyl value = 670 mgKOH/g), and Sanix GP-600 (Mn = 600, hydroxyl value = 280 mgKOH/g), all manufactured by Sanyo Chemical Industries, Ltd. Commercially available polyether polyols other than those manufactured by Sanyo Chemical Industries, Ltd. include the Excenol series manufactured by AGC Inc., the ADEKA Polyether series manufactured by Adeka Corporation, and the PTMG series manufactured by Mitsubishi Chemical Corporation. These commercial products can be used alone or in a combination of two or more.

### Polyacrylate Polyol

The polyol component (C) may contain a polyacrylate polyol. The polyacrylate polyol can be obtained, for example, by polymerizing an acrylate monomer composition containing an acrylate monomer having a hydroxyl group.

Examples of the acrylate monomer having a hydroxyl group include 2-hydroxyethyl (meth)acrylate, 2-hydroxypropyl (meth)acrylate, 2-hydroxybutyl (meth)acrylate, 4-hydroxybutyl (meth)acrylate, polyethylene glycol mono(meth)acrylate, polypropylene glycol mono(meth)acrylate, polytetramethylene glycol mono(meth)acrylate, and the like.

As commercially available polyacrylate polyols, known commercial products can be widely used. Examples of commercially available polyacrylate polyols include Arufon (registered trademark) UH-2000, Arufon (registered trademark) UH-2041, Arufon (registered trademark) UH-2170, and Arufon (registered trademark) UH-2190, all manufactured by Toagosei Co., Ltd. These commercial products can be used alone or in a combination of two or more.

### Polyester Polyol

The polyol component (C) may contain a polyester polyol. The polyester polyol can be obtained, for example, by the esterification reaction of a divalent or higher polyhydric alcohol compound with a divalent or higher polyhydric carboxylic acid.

Examples of the divalent or higher polyhydric alcohol compound include ethylene glycol, diethylene glycol, 1,2-propanediol, 1,3-propanediol, 1,3-butanediol, 1,4-butanediol, neopentyl glycol, 3-methyl-1,5-pentanediol (MPD), 2-butyl-2-ethyl-1,3-propanediol, 2,4-diethyl-1,5-pentanediol, 1,2-hexanediol, 1,6-hexanediol, 1,8-octanediol, 1,9-nonanediol (ND), 2-methyl-1,8-octanediol, 1,8-decanediol, octadecanediol, glycerin, trimethylolpropane (TMP), and the like.

Examples of the divalent or higher polyhydric carboxylic acid include succinic acid, methylsuccinic acid, adipic acid, pimelic acid, azelaic acid, sebacic acid, 1,12-dodecanedioic acid, 1,14-tetradecanedioic acid, dimer acid, 2-methyl-1,4-cyclohexanedicarboxylic acid, 2-ethyl-1,4-cyclohexanedicarboxylic acid, terephthalic acid, isophthalic acid, phthalic acid, isophthalic acid, terephthalic acid, and acid anhydrides thereof.

As commercially available polyester polyols, known commercial products can be widely used. Examples of commercially available polyester polyols include Kuraray Polyol P-510 (Mn = 500, hydroxyl value = 224 mgKOH/g), Kuraray Polyol P-1010 (Mn = 1000, hydroxyl value = 112 mgKOH/g), Kuraray Polyol P-530 (Mn = 500, hydroxyl value = 224 mgKOH/g), Kuraray Polyol P-2050 (Mn = 2000, hydroxyl value = 56 mgKOH/g), and Kuraray Polyol F-510 (Mn = 500, hydroxyl value = 336 mgKOH/g), all manufactured by Kuraray Co., Ltd. Other commercial products include the Polylite series manufactured by DIC Corporation, and the Desmophen XP and VPLS series manufactured by Covestro Japan Ltd. These commercial products can be used alone or in a combination of two or more.

### Polycaprolactone Polyol

The polyol component (C) may contain a polycaprolactone polyol. The polycaprolactone polyol can be obtained, for example, by the ring-opening polymerization of ε-caprolactone.

As commercially available polycaprolactone polyols, known commercial products can be widely used. Examples of commercially available polycaprolactone polyols include Placcel 205U (Mn = 530, hydroxyl value = 212 mgKOH/g) and Placcel 303 (Mn = 310, hydroxyl value = 541 mgKOH/g), both manufactured by Daicel Corporation. These commercial products can be used alone or in a combination of two or more.

### Polycarbonate Polyol

The polyol component (C) may contain a polycarbonate polyol. The polycarbonate polyol can be obtained, for example, by the esterification reaction of a divalent or higher polyhydric alcohol compound with a carbonate diester compound.

Examples of the divalent or higher polyhydric alcohol compound include ethylene glycol, diethylene glycol, 1,2-propanediol, 1,3-propanediol, 1,3-butanediol, 1,4-butanediol, neopentyl glycol, 3-methyl-1,5-pentanediol (MPD), 2-butyl-2-ethyl-1,3-propanediol, 2,4-diethyl-1,5-pentanediol, 1,2-hexanediol, 1,6-hexanediol, 1,8-octanediol, 1,9-nonanediol (ND), 2-methyl-1,8-octanediol, 1,8-decanediol, octadecanediol, glycerin, trimethylolpropane (TMP), and the like.

Examples of the carbonate diester compound include dimethyl carbonate, diethyl carbonate, dipropyl carbonate, diisopropyl carbonate, dibutyl carbonate, ethyl butyl carbonate, ethylene carbonate, propylene carbonate, diphenyl carbonate, dibenzyl carbonate, and the like.

As commercially available polycarbonate polyols, known commercial products can be widely used. Examples of commercially available polycarbonate polyols include Duranol T5650E (Mn = 500, hydroxyl value = 225 mgKOH/g) manufactured by Asahi Kasei Corporation; Kuraray Polyol C-590 (Mn = 500, hydroxyl value = 224 mgKOH/g), Kuraray Polyol C-1090 (Mn = 1000, hydroxyl value = 112 mgKOH/g), and Kuraray Polyol C-2090 (Mn = 2000, hydroxyl value = 56 mgKOH/g), all manufactured by Kuraray Co., Ltd.; and Eternacoll PH-50 (Mn = 500, hydroxyl value = 225 mgKOH/g), Eternacoll PH-100 (Mn = 1000, hydroxyl value = 112 mgKOH/g), and Eternacoll PH-200 (Mn = 2000, hydroxyl value = 56 mgKOH/g), all manufactured by UBE Corporation. These commercial products can be used alone or in a combination of two or more.

### Castor Oil-Modified Polyol and Polyolefin Polyol

The polyol component (C) may contain a castor oil-modified polyol and/or a polyolefin polyol.

As commercially available castor oil-modified polyols and polyolefin polyols, known commercial products can be widely used. Examples of commercially available castor oil-modified polyols include the URIC series manufactured by Ito Oil Chemicals Co., Ltd. Examples of commercially available polyolefin polyols include the Poly bd, Poly ip, and EPOL series manufactured by Idemitsu Kosan Co., Ltd. These commercial products can be used alone or in a combination of two or more.

### Polyhydric Alcohol

The polyol component (C) may contain a polyhydric alcohol. Examples of polyhydric alcohols include ethylene glycol, diethylene glycol, 1,2-propanediol, 1,3-propanediol, glycerin, trimethylolpropane, tetramethylene glycol, 1,2,5-hexanetriol, pentaerythritol, 1,3-butanediol, 1,4-butanediol, 1,5-pentanediol, 1,6-hexanediol, cyclohexanedimethanol, 3-methyl-1,5-pentanediol, neopentyl glycol, sorbitol, and the like. In the present invention, the polyhydric alcohol is preferably 3-methyl-1,5-pentanediol.

In the present invention, the polyol component (C) preferably contains a polyol having a number average molecular weight (Mn) of 5000 or less, more preferably contains a polyol having a Mn of 2000 or less, even more preferably contains a polyol having a Mn of 1500 or less, and still more preferably contains a polyol having a Mn of 1000 or less, from the viewpoint of maintaining good fluidity of the modified polyolefin resin composition. In the present invention, the polyol component (C) preferably contains a polyol having a Mn of 60 or more, more preferably contains a polyol having a Mn of 80 or more, even more preferably contains a polyol having a Mn of 110 or more, and still more preferably contains a polyol having a Mn of 150 or more.

In the present invention, the polyol component (C) preferably contains a polyol having a Mn of 60 or more and 5000 or less, more preferably contains a polyol having a Mn of 80 or more and 2000 or less, even more preferably contains a polyol having a Mn of 110 or more and 1500 or less, and still more preferably contains a polyol having a Mn of 150 or more and 1000 or less, from the viewpoint of maintaining good fluidity of the modified polyolefin resin composition.

In the present invention, the hydroxyl value of the polyol contained in the polyol component (C) is preferably 50 to 1250 mgKOH/g, more preferably 100 to 1000 mgKOH/g, even more preferably 150 to 800 mgKOH/g, and still more preferably 200 to 600 mgKOH/g. When the polyol component (C) contains a polyol having a hydroxyl value of 50 to 1250 mgKOH/g, the action of the polyether chain of the polyetheramine (B) and the polyol component (C) enables the modified polyolefin resin composition of the present invention to maintain good fluidity for an even longer period of time.

The hydroxyl value of the polyol component (C) refers to a value calculated based on solid content and can be evaluated in accordance with JIS K 1557-1: 2007.

In the present invention, the content of the polyol component (C) is preferably 10 to 90 parts by mass, more preferably 20 to 80 parts by mass, and even more preferably 30 to 70 parts by mass, per 100 parts by mass of the modified polyolefin resin composition, from the viewpoint of maintaining even better fluidity of the modified polyolefin resin composition. The content of the polyol component (C) is still more preferably 35 to 65 parts by mass.

The modified polyolefin resin composition of the present invention may contain a coating film-forming resin other than the polyol component (C). Examples of the coating film-forming resin include acrylic resin, polyester resin, alkyd resin, polyether resin, polyolefin resin, polyurethane resin, polycarbonate resin, melamine resin, epoxy resin, carbodiimide resin, and the like. These resins can be used alone or in a combination of two or more. The content of the coating film-forming resin is preferably 10 to 30 parts by mass per 100 parts by mass of the modified polyolefin resin composition.

### Polyisocyanate Compound

The modified polyolefin resin composition of the present invention may contain a polyisocyanate compound. The polyisocyanate compound is used as a curing agent for curing the polyol component (C) to form a resin for forming a coating film. The use of a polyisocyanate compound can further improve the corrosion resistance and durability of the coating film.

As the polyisocyanate compound, polyisocyanate compounds widely known in the art for producing polyurethanes can be used. Examples include the following:
(i) aliphatic polyisocyanate compounds having 2 to 18 carbon atoms;
(ii) alicyclic polyisocyanate compounds having 4 to 15 carbon atoms;
(iii) aromatic polyisocyanate compounds having 8 to 15 carbon atoms; and aromatic polyisocyanate compounds having 6 to 20 carbon atoms (except for carbon in the NCO group; the same applies below) and crude products thereof; and
(iv) modified products of the above polyisocyanate compounds (i) to (iii) (modified products containing urethane groups, carbodiimide groups, allophanate groups, urea groups, biuret groups, uretdione groups, uretoimine groups, isocyanurate groups, or oxazolidone groups), and mixtures of two or more of these modified products.

These polyisocyanate compounds can be used alone or in a combination of two or more. From the viewpoint of further improving corrosion resistance and durability, preferred among these polyisocyanate compounds are aliphatic polyisocyanate compounds having 2 to 18 carbon atoms and/or alicyclic polyisocyanate compounds having 4 to 15 carbon atoms.

Specific examples of the aliphatic polyisocyanate compounds having 2 to 18 carbon atoms include ethylene diisocyanate, tetramethylene diisocyanate, hexamethylene diisocyanate (HDI), dodecamethylene diisocyanate, 1,6,11-undecanetriisocyanate, 2,2,4-trimethylhexamethylene diisocyanate, lysine diisocyanate, 2,6-diisocyanatomethyl caproate, bis(2-isocyanatoethyl) fumarate, bis(2-isocyanatoethyl) carbonate, 2-isocyanatoethyl-2,6-diisocyanatohexanoate, and the like. These can be used alone or in a combination of two or more.

Specific examples of the alicyclic polyisocyanate compounds having 4 to 15 carbon atoms include isophorone diisocyanate (IPDI), dicyclohexylmethane-4,4'-diisocyanate (hydrogenated MDI), cyclohexylene diisocyanate, methylcyclohexylene diisocyanate (hydrogenated TDI), 1,3-bis(isocyanatomethyl)cyclohexane, bis(2-isocyanatoethyl)-4-cyclohexene-1,2-dicarboxylate, 2,5-norbornane diisocyanate, 2,6-norbornane diisocyanate, and the like. These can be used alone or in a combination of two or more.

Specific examples of the aromatic polyisocyanate compounds having 8 to 15 carbon atoms include m- and/or p-xylylene diisocyanate (XDI), α,α,α',α'-tetramethylxylylene diisocyanate (TMXDI), and the like. These can be used alone or in a combination of two or more.

Specific examples of the aromatic polyisocyanate compounds having 8 to 15 carbon atoms include 1,3- and/or 1,4-phenylene diisocyanate, 2,4- and/or 2,6-tolylene diisocyanate (TDI), crude TDI, 2,4'- and/or 4,4'-biphenylmethane diisocyanate (MDI), 4,4'-diisocyanatobiphenyl, 3,3'-dimethyl-4,4'-diisocyanatobiphenyl, 3,3'-dimethyl-4,4'-diisocyanatodiphenylmethane, crude MDI, 1,5-naphthylene diisocyanate, 4,4',4"-triphenylmethane triisocyanate, m- and p-isocyanatophenylsulfonyl isocyanate, 1,3-bis(isocyanatomethyl)benzene, and the like. These can be used alone or in a combination of two or more.

Examples of modified products of the above polyisocyanate compounds include modified polyisocyanates, such as modified MDI (urethane-modified MDI, carbodiimide-modified MDI, and trihydrocarbyl phosphate-modified MDI), urethane-modified TDI, biuret-modified HDI, isocyanurate-modified HDI, and isocyanurate-modified IPDI; and mixtures of two or more of these modified products (e.g., combined use of modified MDI and urethane-modified TDI (isocyanate group-containing prepolymer)). Preferred among these is isocyanurate-modified HDI.

In addition to the polyisocyanate compound described above, the modified polyolefin resin composition of the present invention may also contain a polyisocyanate compound in which isocyanate groups are blocked with a blocking agent. Examples of blocking agents include phenol compounds, oxime compounds, lactam compounds, alcohol compounds, mercaptan compounds, pyrazole compounds, and active methylene compounds such as diethyl malonate. When using a blocked polyisocyanate compound, it is preferable to use a catalyst for dissociating the blocking agent. An unblocked polyisocyanate compound and a blocked polyisocyanate compound can also be used in combination.

The number average molecular weight of the polyisocyanate compound is preferably 3000 or less, and more preferably 100 to 1500.

As commercially available polyisocyanate compounds, known commercial products can be widely used. Examples include Bayhydur, TP-LS2550, and Sumidur N3300, all manufactured by Sumika Bayer Urethane Co., Ltd.; TPA100 manufactured by Asahi Chemicals Co., Ltd.; and Basonat HI 100 manufactured by BASF. These commercial products can be used alone or in a combination of two or more.

The amount of the polyisocyanate compound used may be such that the equivalent ratio of isocyanate groups (NCO) contained in the polyisocyanate compound to hydroxyl groups (OH) in the polyol component (C) (NCO/OH) is generally within the range of 0.5 to 2.0.

### Other Curing Agents

The modified polyolefin resin composition of the present invention may contain a curing agent other than the polyisocyanate compound. Examples of other curing agents include amino resins, monomers or dimers of the isocyanate compounds mentioned above, epoxy compounds, aziridine compounds, carbodiimide compounds, oxazoline compounds, and the like. These can be used alone or in a combination of two or more.

### Curing Catalyst

When the modified polyolefin resin composition of the present invention is cured with a polyisocyanate compound, a curing catalyst can be used. The use of a curing catalyst can promote the curing reaction. The curing catalyst is preferably an organometallic catalyst containing at least one metal element selected from the group consisting of Bi, Zn, Al, Ti, Zr, and Sn, from the viewpoint of promoting the curing reaction.

Examples of organometallic catalysts containing Bi include bismuth carboxylic acid and bismuth carboxylate. Examples of organometallic catalysts containing Zn include zinc complex catalysts. Examples of organometallic catalysts containing Al include aluminum complex catalysts. Examples of organometallic catalysts containing Ti include titanium complex catalysts. Examples of organometallic catalysts containing Zr include zirconium chelate catalysts. Examples of organometallic catalysts containing Sn include dialkyltin dicarboxylates, such as dibutyltin dilaurate, dioctyltin dilaurate, and dibutyltin diacetate; tin oxide compounds, such as dibutyltin oxide; and tin carboxylates, such as tin 2-ethylhexanoate.

Examples of commercially available organometallic catalysts containing Bi include K-KAT 348 and K-KAT XK-640 manufactured by Kusumoto Chemicals, Ltd. Examples of commercially available organometallic catalysts containing Zr include K-KAT 4205, K-KAT XC-9213, K-KAT XC-A209, and K-KAT 6212, all manufactured by Kusumoto Chemicals, Ltd., and the Orgatix ZA and ZC series manufactured by Matsumoto Fine Chemical Co., Ltd. Examples of commercially available organometallic catalysts containing Al include K-KAT 5218 manufactured by Kusumoto Chemicals, Ltd., and the Orgatix AL series manufactured by Matsumoto Fine Chemical Co., Ltd. Examples of commercially available organometallic catalysts containing Ti include the Orgatix TA and TC series manufactured by Matsumoto Fine Chemical Co., Ltd. Examples of commercially available organometallic catalysts containing Zn include K-KAT XK-314, K-KAT XK-635, K-KAT XK-639, and K-KAT XK-620 (all manufactured by Kusumoto Chemicals, Ltd.). Examples of commercially available organometallic catalysts containing Sn include TVS Tin Lau (manufactured by Nitto Kasei Co., Ltd.).

The amount of curing catalyst used is preferably 0.001 to 2.5 parts by mass, more preferably 0.05 to 2.0 parts by mass, even more preferably 0.1 to 1.5 parts by mass, and still more preferably 0.2 to 1.0 part by mass, per 100 parts by mass of the modified polyolefin resin composition.

### Surfactant

The modified polyolefin resin composition of the present invention may contain a surfactant. Examples of surfactants include nonionic surfactants, anionic surfactants, cationic surfactants, amphoteric surfactants, and the like. These surfactants can be used alone or in a combination of two or more. In terms of further improving the water resistance of the coating film, preferred among these surfactants are nonionic surfactants and anionic surfactants, and more preferred are nonionic surfactants.

Examples of nonionic surfactants include polyoxyethylene alkyl ethers, polyoxypropylene alkyl ethers, polyoxyethylene alkyl phenyl ethers, polyoxypropylene alkyl phenyl ethers, polyoxyethylene styrenated phenyl ethers, polyoxypropylene styrenated phenyl ethers, polyoxyethylene fatty acid esters, polyoxypropylene fatty acid esters, polyoxyethylene sorbitan fatty acid esters, polyoxypropylene sorbitan fatty acid esters, polyoxyethylene alkylamides, polyoxypropylene alkylamides, polyoxyethylene lanolin alcohol ethers, polyoxypropylene lanolin alcohol ethers, polyoxyethylene lanolin fatty acid esters, polyoxypropylene lanolin fatty acid esters, and (polyoxyethylene oxypropylene) block copolymers. These can be used alone or in a combination of two or more. As nonionic surfactants, known commercial products can be widely used, and examples include the Emulmin series manufactured by Sanyo Chemical Industries, Ltd., the Noigen series manufactured by DKS Co., Ltd., and the Blaunon series manufactured by Aoki Oil Industrial Co., Ltd.

Examples of anionic surfactants include higher alkyl sulfates, alkylaryl polyoxyethylene sulfuric ester salts, higher fatty acid salts, alkylaryl sulfonic acid salts, and alkyl phosphoric ester salts. These can be used alone or in a combination of two or more. As anionic surfactants, known commercial products can be widely used, and examples include the Neocol series and Hitenol series manufactured by DKS Co. Ltd.

The amount of surfactant used is preferably 1 to 60 parts by mass, more preferably 3 to 40 parts by mass, and even more preferably 5 to 30 parts by mass, per 100 parts by mass of the acid-modified polyolefin resin (A), from the viewpoint of the stability of the modified polyolefin resin composition and the water resistance of the coating film.

### Various Additives

The modified polyolefin resin composition of the present invention may contain various additives, as necessary. Examples of such various additives include tackifiers, film-forming aids, antifoaming agents, anti-sagging agents, wetting agents, ultraviolet absorbers, and the like.

Examples of tackifiers include rosin, dammar, polymerized rosin, hydrogenated rosin, ester rosin, rosin-modified maleic acid resin, polyterpene resin, petroleum resin, cyclopentadiene resin, phenol resin, xylene resin, coumarone-indene resin, and the like. The amount of tackifier used is preferably 5 to 100 parts by mass, and more preferably 10 to 50 parts by mass, per 100 parts by mass of the modified polyolefin resin composition.

### Organic Solvent

The modified polyolefin resin composition of the present invention may contain or may not contain an organic solvent.

As an embodiment of the present invention, when the present invention contains an organic solvent, the present invention preferably contains a small amount of organic solvent, in terms of environmental and hygiene aspects. In that case, the amount of organic solvent used is preferably 20 parts by mass or less, more preferably 10 parts by mass or less, even more preferably 5 parts by mass or less, still more preferably 3 parts by mass or less, and particularly preferably 1 part by mass or less, per 100 parts by mass of the modified polyolefin resin composition. When the present invention contains an organic solvent, the viscosity of the modified polyolefin resin composition is further reduced, which has the advantage of improving coating properties.

As another embodiment of the present invention, when the present invention does not contain an organic solvent, the present invention can be suitably used as the main agent of a solvent-free two-component curing polyurethane binder. In the present specification, "solvent-free" means that an organic solvent is not intentionally added to the modified polyolefin resin composition of the present invention. An embodiment in which the organic solvent used in the production of the acid-modified polyolefin resin (A) remains falls under the category of "solvent-free."

Examples of organic solvents include aromatic hydrocarbons, such as benzene, toluene, and xylene; aliphatic hydrocarbons, such as hexane, heptane, octane, and decane; alicyclic hydrocarbons, such as cyclohexane, cyclohexene, methylcyclohexane, and ethylcyclohexane; halogenated hydrocarbons, such as trichloroethylene, dichloroethylene, chlorobenzene, and chloroform; alcohol-based solvents, such as methanol, ethanol, isopropyl alcohol, butanol, pentanol, 1-hexanol, 2-ethylhexanol, 2-methylcyclohexanol, phenol, and 2-heptyl alcohol; ketone-based solvents, such as acetone, methyl isobutyl ketone, methyl ethyl ketone, pentanone, hexanone, cyclohexanone, isophorone, and acetophenone; cellosolve-based solvents, such as methyl cellosolve and ethyl cellosolve; ester-based solvents, such as methyl acetate, ethyl acetate, butyl acetate, methyl propionate, ethyl propionate, and butyl formate; and ether-based solvents, such as ethylene glycol mono-n-butyl ether, ethylene glycol mono-iso-butyl ether, ethylene glycol mono-tert-butyl ether, diethylene glycol mono-n-butyl ether, diethylene glycol mono-iso-butyl ether, triethylene glycol mono-n-butyl ether, tetraethylene glycol mono-n-butyl ether, dibenzyl ether, diphenyl ether, and butylphenyl ether. These can be used alone or in a combination of two or more.

### Method for Producing Modified Polyolefin Resin Composition

As the method for producing a modified polyolefin resin composition of the present invention, known methods can be widely used. For example, the following method can be used.
Step (1): The acid-modified polyolefin resin (A) and the polyol component (C) are placed in a stirrer equipped with a heating device and kneaded while heating.
Step (2): The polyetheramine (B) is further added to the stirrer and kneaded while heating.
Step (3): Thereafter, the mixture is cooled to room temperature and filtered to obtain a modified polyolefin resin composition.

In step (1), the heating temperature during kneading is generally 50 to 200°C, preferably 60°C to 150°C, and more preferably 70°C to 120°C. The kneading time varies depending on the heating temperature etc., but is generally 10 minutes to 120 minutes, preferably 15 minutes to 90 minutes, and more preferably 20 minutes to 60 minutes. Step (1) can be carried out, for example, under a nitrogen atmosphere to remove moisture.

In step (2), the heating temperature during kneading is generally 50 to 200°C, preferably 60°C to 150°C, and more preferably 70°C to 120°C. The kneading time varies depending on the heating temperature etc., but is generally 10 minutes to 120 minutes, preferably 15 minutes to 90 minutes, and more preferably 20 minutes to 75 minutes. Step (2) can be carried out, for example, under a nitrogen atmosphere to remove moisture.

In step (3), filtration can be carried out using, for example, a wire mesh with an opening of 50 µm to 300 µm. Step (3) can be carried out, for example, under a nitrogen atmosphere to remove moisture.

The present invention is a cured product obtained by curing a modified polyolefin resin composition. In other words, the cured product is a product obtained by curing the modified polyolefin resin composition of the present invention. Hereinafter, the cured product is simply referred to as "the cured product of the present invention."

### Use of the Present Invention

The modified polyolefin resin composition of the present invention and the cured product of the present invention can be suitably used for polyolefin substrates. Examples of polyolefin substrates include blocks (plates, rods, spheres, etc.), sheets, films, threads, and fabrics (woven fabrics, knitted fabrics, nonwoven fabrics, etc.) processed from polyolefins. Of these polyolefin substrates, sheets and films are preferred from the viewpoint of production. The film thickness may be 5 µm to 100 µm. Examples of polyolefins include polypropylene, polyethylene, ethylene-propylene copolymers, ethylene-propylene-diene copolymers, polybutene, poly(4-methyl-1-pentene), and the like. The modified polyolefin resin composition of the present invention and the cured product of the present invention can be particularly suitably used for polypropylene substrates.

The modified polyolefin resin composition of the present invention and the cured product of the present invention can be suitably applied to paints for molded articles, inks, adhesives, sealants, primers, coating agents, in-mold coating paints, and the like. The modified polyolefin resin composition of the present invention and the cured product of the present invention can be particularly suitably used for inks for polyolefin substrates, adhesives for polyolefin substrates, primers for polyolefin substrates, paints for polyolefin substrates, and in-mold coating paints for polyolefin substrates.

A coating film can be obtained from the modified polyolefin resin composition of the present invention. The coating film can be particularly suitably used for metal products, electronic devices, packaging materials, automotive parts, and the like.

The method for producing a coating film from the modified polyolefin resin composition of the present invention is, for example, a method in which the modified polyolefin resin composition of the present invention is uniformly applied to the surface of various substrates and subjected to heat treatment (e.g., baking treatment). As a result, a uniform coating film can be formed on various substrate surfaces. Examples of the coating method include gravure coating, curtain flow coating, Mayer bar coating, dip coating, brush coating, roll coating, spray coating, and the like. The amount of the modified polyolefin resin composition applied to the substrate is not particularly limited, and is appropriately selected depending on the application. It is preferable that the thickness of the dry coating film is within the range of 1 µm to 100 µm. The heat treatment can be carried out using a hot-air circulation oven, an infrared heater, or the like. Another method is to mold a plastic substrate in a mold, inject the modified polyolefin resin composition of the present invention between the mold and the substrate, and then apply heat and pressure to form a coating film. The heating temperature when forming the coating film is generally 60 to 200°C. The heating time when forming the coating film is generally 15 seconds to 20 minutes.

### Examples

Next, the present invention is described in detail based on Examples; however, the present invention is not limited by the following Examples. Hereinafter, "room temperature" refers to a temperature within the range of 20°C to 25°C.

### (1) Measurement of Weight Average Molecular Weight (Mw) by High-temperature GPC

The measurement was performed by using orthodichlorobenzene as a solvent at 140°C with a GPC150-C Plus (manufactured by Waters Corporation; column: GMH6-HT + GMH6-HTL manufactured by Tosoh Corporation). The weight average molecular weight (Mw) was calculated based on polystyrene of known molecular weight as the standard substance.

### (2) Measurement of Melting Point by Differential Scanning Calorimeter (DSC)

In accordance with JIS K7121-2012, with a DSC meter (manufactured by Seiko Instruments Inc.), about 5 mg of a sample was maintained in a heated and melted state at 150°C for 10 minutes and then cooled at a rate of 10°C/minute until the sample was stabilized and maintained at -50°C. The sample was further heated at a rate of 10°C/minute to 150°C, and the peak melting temperature at which the sample was melted was measured and evaluated as the melting point.

### Production Example 1

280 g of a propylene-α-olefin copolymer (propylene content: 70 mol%), 62 g of maleic anhydride, 7 g of dicumyl peroxide, and 420 g of toluene were added to an autoclave equipped with a stirrer, which was then purged with nitrogen for about 5 minutes. Thereafter, a reaction was performed at 140°C for 5 hours with heating and stirring. After the reaction was completed, the reaction solution was poured into a large amount of methyl ethyl ketone to precipitate a resin. The resin was further washed with methyl ethyl ketone several times to remove unreacted maleic anhydride. The resulting resin was dried under reduced pressure to obtain a solid of acid-modified polyolefin resin (MPO-1). The results of infrared absorption spectroscopy indicated that the total content of the maleic anhydride component and maleic acid component in MPO-1 was 2.0 mass%. The weight average molecular weight of MPO-1 measured by high-temperature GPC was 70000, and the melting point measured by DSC was 70°C.

### Production Example 2

280 g of a propylene homopolymer (homopolypropylene, propylene content: 100 mol%), 36 g of maleic anhydride, 5.6 g of dicumyl peroxide, and 420 g of toluene were placed in an autoclave equipped with a stirrer, which was then purged with nitrogen for about 5 minutes. Thereafter, a reaction was performed at 140°C for 5 hours with heating and stirring. After the reaction was completed, the reaction solution was poured into a large amount of methyl ethyl ketone to precipitate a resin. The resin was further washed with methyl ethyl ketone several times to remove unreacted maleic anhydride. The resulting resin was dried under reduced pressure to obtain a solid of acid-modified polyolefin resin (MPO-2). The results of infrared absorption spectroscopy indicated that the total content of the maleic anhydride component and maleic acid component in MPO-2 was 1.8 mass%. The weight average molecular weight of MPO-2 measured by high-temperature GPC was 40000, and the melting point measured by DSC was 75°C.

### Production Example 3

280 g of a propylene-α-olefin copolymer (propylene content: 94 mol%), 14 g of maleic anhydride, 5.6 g of dicumyl peroxide, and 420 g of toluene were placed in an autoclave equipped with a stirrer, which was then purged with nitrogen for about 5 minutes. Thereafter, a reaction was performed at 140°C for 5 hours with heating and stirring. After the reaction was completed, the reaction solution was poured into a large amount of methyl ethyl ketone to precipitate a resin. The resin was further washed with methyl ethyl ketone several times to remove unreacted maleic anhydride. After drying under reduced pressure, 280 g of the resulting maleic anhydride-modified polyolefin resin and 2520 g of chloroform were placed in an autoclave equipped with a stirrer, which was then purged with nitrogen for about 5 minutes. Thereafter, the autoclave was heated to 110°C to fully dissolve the resin. Subsequently, 1.4 g of tert-butylperoxy-2-ethylhexanoate was added, and a predetermined amount of chlorine gas was blown into the autoclave. The reaction solvent, chloroform, was distilled off under reduced pressure, and the residue was dried, thereby obtaining a solid of acid-modified chlorinated polyolefin resin (CPO-1). The weight average molecular weight of CPO-1 measured by high-temperature GPC was 80000, and the melting point measured by DSC was 75°C. Further, the chlorine content of CPO-1 was 21 mass%, and the maleic anhydride content was 1.5 mass%.

### Example 1 (Production of Modified Polyolefin Resin Composition (a))

In a 200 ml four-necked flask equipped with a condenser, a thermometer, and a stirrer, 20 g of MPO-1 obtained in Production Example 1 as the acid-modified polyolefin resin (A) and 60 g of polypropylene glycol (Sanix PP-200 (Mn = 200, hydroxyl value = 560 mgKOH/g) manufactured by Sanyo Chemical Industries, Ltd.) as the polyol component (C) were placed. Under a nitrogen atmosphere, the internal temperature was raised to 90°C, and the mixture was dissolved by heating for 30 minutes. Thereafter, 8 g of Jeffamine M-2070 (MW = 2000, HLB value = 13.8) manufactured by Huntsman (number of primary amino groups: 1, number of secondary amino groups: 0) was added as the polyetheramine (B), followed by stirring at 90°C for 1 hour. Then, the mixture was cooled to room temperature and filtered through a wire mesh with an opening of 154 µm, thereby obtaining a modified polyolefin resin composition (a).

### Example 2 (Production of Modified Polyolefin Resin Composition (b))

A modified polyolefin resin composition (b) was obtained in the same manner as in Example 1, except that MPO-2 obtained in Production Example 2 was used as the acid-modified polyolefin resin (A).

### Example 3 (Production of Modified Polyolefin Resin Composition (c))

A modified polyolefin resin composition (C) was obtained in the same manner as in Example 1, except that CPO-1 obtained in Production Example 3 was used as the acid-modified polyolefin resin (A).

### Example 4 (Production of Modified Polyolefin Resin Composition (d))

A modified polyolefin resin composition (d) was obtained in the same manner as in Example 1, except that CPO-1 obtained in Production Example 3 was used as the acid-modified polyolefin resin (A), and Jeffamine M-1000 (MW = 1000, HLB value = 16.1) manufactured by Huntsman (number of primary amino groups: 1, number of secondary amino groups: 0) was used as the polyetheramine (B).

### Example 5 (Production of Modified Polyolefin Resin Composition (e))

A modified polyolefin resin composition (e) was obtained in the same manner as in Example 1, except that Jeffamine M-2005 (MW = 2000, HLB value = 2.7) manufactured by Huntsman (number of primary amino groups: 1, number of secondary amino groups: 0) was used as the polyetheramine (B).

### Example 6 (Production of Modified Polyolefin Resin Composition (f))

A modified polyolefin resin composition (f) was obtained in the same manner as in Example 1, except that the amount of the polyetheramine (B) used was changed to 15 g, and the amount of the polyol component (C) used was changed to 30 g.

### Example 7 (Production of Modified Polyolefin Resin Composition (g))

A modified polyolefin resin composition (g) was obtained in the same manner as in Example 1, except that the amount of the polyetheramine (B) used was changed to 15 g.

### Example 8 (Production of Modified Polyolefin Resin Composition (h))

A modified polyolefin resin composition (h) was obtained in the same manner as in Example 1, except that the amount of the acid-modified polyolefin resin (A) used was changed to 10 g, and the amount of the polyetheramine (B) used was changed to 1.5 g.

### Example 9 (Production of Modified Polyolefin Resin Composition (i))

A modified polyolefin resin composition (i) was obtained in the same manner as in Example 1, except that the amount of the polyetheramine (B) used was changed to 1.5 g.

### Example 10 (Production of Modified Polyolefin Resin Composition (j))

A modified polyolefin resin composition (j) was obtained in the same manner as in Example 1, except that 72 g of polypropylene glycol (Sanix PP-400 (Mn = 400, hydroxyl value = 280 mgKOH/g) manufactured by Sanyo Chemical Industries, Ltd.) was used as the polyol component (C).

### Example 11 (Production of Modified Polyolefin Resin Composition (k))

A modified polyolefin resin composition (k) was obtained in the same manner as in Example 1, except that 40 g of polypropylene glycol (Sanix PP-200 (Mn = 200, hydroxyl value = 560 mgKOH/g) manufactured by Sanyo Chemical Industries, Ltd.) and 32 g of polypropylene glycol (Sanix PP-1000 (Mn = 1000, hydroxyl value = 112 mgKOH/g) manufactured by Sanyo Chemical Industries, Ltd.) were used as the polyol component (C).

### Example 12 (Production of Modified Polyolefin Resin Composition (l))

A modified polyolefin resin composition (1) was obtained in the same manner as in Example 1, except that 40 g of polypropylene glycol (Sanix PP-400 (Mn = 400, hydroxyl value = 280 mgKOH/g) manufactured by Sanyo Chemical Industries, Ltd.) and 32 g of polyester polyol (Kuraray Polyol P-510 (Mn = 500, hydroxyl value = 224 mgKOH/g) manufactured by Kuraray Co., Ltd.) were used as the polyol component (C).

### Example 13 (Production of Modified Polyolefin Resin Composition (m))

A modified polyolefin resin composition (m) was obtained in the same manner as in Example 1, except that 40 g of polypropylene glycol (Sanix PP-400 (Mn = 400, hydroxyl value = 280 mgKOH/g) manufactured by Sanyo Chemical Industries, Ltd.) and 32 g of polyester polyol (Kuraray Polyol F-510 (Mn = 500, hydroxyl value = 336 mgKOH/g) manufactured by Kuraray Co., Ltd.) were used as the polyol component (C).

### Example 14 (Production of Modified Polyolefin Resin Composition (n))

A modified polyolefin resin composition (n) was obtained in the same manner as in Example 1, except that 40 g of polypropylene glycol (Sanix PP-400 (Mn = 400, hydroxyl value = 280 mgKOH/g) manufactured by Sanyo Chemical Industries, Ltd.) and 32 g of polyester polyol (Kuraray Polyol P-2050 (Mn = 2000, hydroxyl value = 56 mgKOH/g) manufactured by Kuraray Co., Ltd.) were used as the polyol component (C).

### Example 15 (Production of Modified Polyolefin Resin Composition (o))

A modified polyolefin resin composition (o) was obtained in the same manner as in Example 1, except that 40 g of polypropylene glycol (Sanix PP-400 (Mn = 400, hydroxyl value = 280 mgKOH/g) manufactured by Sanyo Chemical Industries, Ltd.) and 32 g of polycaprolactone polyol (Placcel 205U (Mn = 530, hydroxyl value = 212 mgKOH/g) manufactured by Daicel Corporation) were used as the polyol component (C).

### Example 16 (Production of Modified Polyolefin Resin Composition (p))

A modified polyolefin resin composition (p) was obtained in the same manner as in Example 1, except that 40 g of polypropylene glycol (Sanix PP-400 (Mn = 400, hydroxyl value = 280 mgKOH/g) manufactured by Sanyo Chemical Industries, Ltd.) and 32 g of polycarbonate polyol (Kuraray Polyol C590 (Mn = 500, hydroxyl value = 224 mgKOH/g) manufactured by Kuraray Co., Ltd.) were used as the polyol component (C).

### Example 17 (Production of Modified Polyolefin Resin Composition (q))

A modified polyolefin resin composition (q) was obtained in the same manner as in Example 1, except that 40 g of polypropylene glycol (Sanix PP-200 (Mn = 200, hydroxyl value = 560 mgKOH/g) manufactured by Sanyo Chemical Industries, Ltd.) and 32 g of polyhydric alcohol (3-methyl-1,5-pentanediol (Mn = 91, hydroxyl value = 1230 mgKOH/g)) were used as the polyol component (C).

### Comparative Example 1

In a 200 ml four-necked flask equipped with a condenser, a thermometer, and a stirrer, 20 g of MPO-1 obtained in Production Example 1 as the acid-modified polyolefin resin (A) and 60 g of polypropylene glycol (Sanix PP-200 (Mn = 200, hydroxyl value = 560 mgKOH/g) manufactured by Sanyo Chemical Industries, Ltd.) as the polyol component (C) were placed. Under a nitrogen atmosphere, the internal temperature was raised to 90°C, and the mixture was dissolved by heating for 30 minutes. Thereafter, the mixture was stirred at 90°C for 1 hour without adding the polyetheramine (B). Then, the mixture was cooled to room temperature; however, the resin precipitated, failing to obtain a modified polyolefin resin composition.

### Comparative Example 2

In a 200 ml four-necked flask equipped with a condenser, a thermometer, and a stirrer, 20 g of MPO-1 obtained in Production Example 1 as the acid-modified polyolefin resin (A) and 60 g of polypropylene glycol (Sanix PP-200 (Mn = 200, hydroxyl value = 560 mgKOH/g) manufactured by Sanyo Chemical Industries, Ltd.) as the polyol component (C) were placed. Under a nitrogen atmosphere, the internal temperature was raised to 90°C, and the mixture was dissolved by heating for 30 minutes. Thereafter, polyoxyethylene alkyl ether (Mn = 1050, HLB value = 15.3) was added as a surfactant, and the mixture was stirred at 90°C for 1 hour without adding the polyetheramine (B). Then, the mixture was cooled to room temperature; however, the resin precipitated, failing to obtain a modified polyolefin resin composition.

### Comparative Example 3 (Production of Modified Polyolefin Resin Composition (r))

In a 200 ml four-necked flask equipped with a condenser, a thermometer, and a stirrer, only 60 g of polypropylene glycol (Sanix PP-200 (Mn = 200, hydroxyl value = 560 mgKOH/g) manufactured by Sanyo Chemical Industries, Ltd.) was placed as the polyol component (C). Under a nitrogen atmosphere, the internal temperature was raised to 90°C, and the mixture was dissolved by heating for 30 minutes. Thereafter, 8 g of Jeffamine M-2070 (MW = 2000, HLB value = 13.8) was added as the polyetheramine (B), followed by stirring at 90°C for 1 hour. Then, the mixture was cooled to room temperature and filtered through a wire mesh with an opening of 154 µm, thereby obtaining a modified polyolefin resin composition (r). In Comparative Example 3, the acid-modified polyolefin resin (A) was not used.

### (1) Evaluation of Fluidity at 25°C and 80°C

The modified polyolefin resin compositions obtained in the Examples and Comparative Examples were visually evaluated for fluidity at 25°C and 80°C immediately after production, fluidity at 25°C and 80°C the next day (24 hours after production), and fluidity at 25°C and 80°C after a week (168 hours after production). A composition with fluidity after a week was rated "A," a composition with fluidity the next day was rated "B," a composition with fluidity only immediately after production was rated "C," and a composition with no fluidity immediately after production was rated "D."

### (2) Evaluation of Adhesion

To 3 g of each of the modified polyolefin resin compositions obtained in the Examples and Comparative Examples, 0.015 g of dibutyltin dilaurylate as a curing catalyst and Sumidur N3300 manufactured by Sumika Bayer Urethane Co., Ltd. as a polyisocyanate compound were added so that OH/NCO = 1.2, and the mixture was stirred with a magnetic stirrer for 30 seconds. The mixture obtained by stirring was applied to a PP (polypropylene) bumper substrate, which had been washed with isopropyl alcohol, at room temperature using a No. 16 bar coater so that the dry coating film had a thickness of about 10 µm. After baking at 120°C for 10 minutes, the substrate was left to stand for 72 hours in an atmosphere of 25°C and 60% relative humidity to prepare a test plate. A grid of 100 squares was made on this test plate with 1 mm intervals, reaching down to the base. Cellophane tape was pressed onto the squares and then peeled off at an angle of 90 degrees relative to the coated surface. This operation was performed three times. A coating film with no peeling even after three tries was rated "A." A coating film that had peeled after the third try was rated "B." A coating film that had peeled after the first or second try was rated "C."

Table 1 below shows the raw materials and their amounts used in the Examples and Comparative Examples, the evaluation results of the resulting modified polyolefin resin compositions (a) to (r), and the like. For Comparative Examples 1 and 2, in which no modified polyolefin resin composition was obtained, adhesion was deemed "not evaluable."

**Table 1-1**

| | | **Unit** | **Ex. 1** | **Ex. 2** | **Ex. 3** | **Ex. 4** | **Ex. 5** | **Ex. 6** | **Ex. 7** | **Ex. 8** | **Ex. 9** | **Ex. 10** |
|---|---|---|---|---|---|---|---|---|---|---|---|---|
| **Modified polyolefin resin composition** | | **-** | **(a)** | **(b)** | **(c)** | **(d)** | **(e)** | **(f)** | **(g)** | **(h)** | **(i)** | **(j)** |
| **Acid-modified polyolefin resin (A)** | **MPO-1** | **g** | **20** | **-** | **-** | **-** | **20** | **20** | **20** | **10** | **20** | **20** |
| | **MPO-2** | **g** | **-** | **20** | **-** | **-** | **-** | **-** | **-** | **-** | **-** | **-** |
| | **CPO-1** | **g** | **-** | **-** | **20** | **20** | **-** | **-** | **-** | **-** | **-** | **-** |
| **Polyetheramine (B)** | **Jeffamine M-2070 (MW = 2000, HLB value = 13.8)** | **g** | **8** | **8** | **8** | **-** | **-** | **15** | **15** | **1.5** | **1.5** | **8** |
| | **Jeffamine M-1000 (MW = 1000, HLB value = 16.1)** | **g** | **-** | **-** | **-** | **8** | **-** | **-** | **-** | **-** | **-** | **-** |
| | **Jeffamine M-2005 (MW = 2000, HLB value = 2.7)** | **g** | **-** | **-** | **-** | **-** | **8** | **-** | **-** | **-** | **-** | **-** |
| | **Number of primary amino groups** | **Num. of groups** | **1** | **1** | **1** | **1** | **1** | **1** | **1** | **1** | **1** | **1** |
| | **Number of secondary amino groups** | **Num. of groups** | **0** | **0** | **0** | **0** | **0** | **0** | **0** | **0** | **0** | **0** |
| | **Polypropylene glycol: Sanix PP-200 (Mn = 200, hydroxyl value = 560 mgKOH/g)** | **g** | **60** | **60** | **60** | **60** | **60** | **30** | **60** | **60** | **60** | **-** |
| | **Polypropylene glycol: Sanix PP-400 (Mn = 400, hydroxyl value = 280 mgKOH/g)** | **g** | **-** | **-** | **-** | **-** | **-** | **-** | **-** | **-** | **-** | **72** |
| | **Polypropylene glycol: Sanix PP-1000 (Mn = 1000, hydroxyl value = 112 mgKOH/g)** | **g** | **-** | **-** | **-** | **-** | **-** | **-** | **-** | **-** | **-** | **-** |
| | **Polyester polyol: Kuraray Polyol P-510 (Mn = 500, hydroxyl value = 224 mgKOH/g)** | **g** | **-** | **-** | **-** | **-** | **-** | **-** | **-** | **-** | **-** | **-** |
| **Polyol component (C)** | **Polyester polyol: Kuraray Polyol F-510 (Mn = 500, hydroxyl value = 336 mgKOH/g)** | **g** | **-** | **-** | **-** | **-** | **-** | **-** | **-** | **-** | **-** | **-** |
| | **Polyester polyol: Kuraray Polyol P-2050 (Mn = 2000, hydroxyl value = 56 mgKOH/g)** | **g** | **-** | **-** | **-** | **-** | **-** | **-** | **-** | **-** | **-** | **-** |
| | **Polycaprolaclone polyol: Placcel 205U (Mn = 530, hydroxyl value = 212 mgKOH/g)** | **g** | **-** | **-** | **-** | **-** | **-** | **-** | **-** | **-** | **-** | **-** |
| | **Polycarbonate polyol: Kuraray Polyol C-590 (Mn = 500, hydroxyl value = 224 mgKOH/g)** | **g** | **-** | **-** | **-** | **-** | **-** | **-** | **-** | **-** | **-** | **-** |
| | **Polyhydric alcohol: 3-methyl-1,5-pentanediol (Mn = 91, hydroxyl value = 1230 mgKOH/g)** | **g** | **-** | **-** | **-** | **-** | **-** | **-** | **-** | **-** | **-** | **-** |
| **Surfactant** | **Nonionic surfaclant:: polyoxyethylene alkyl ether (Mn = 1050, HLB value = 15.3)** | **g** | **-** | **-** | **-** | **-** | **-** | **-** | **-** | **-** | **-** | **-** |
| **Mass of (B) when (A) is 100 g** | | **g** | **40** | **40** | **40** | **40** | **40** | **75** | **75** | **15** | **7.5** | **40** |
| **Mass of (A) when (C) is 100 g** | | **g** | **33.3** | **33.3** | **33.3** | **33.3** | **33.3** | **66.7** | **33.3** | **16.7** | **33.3** | **27.8** |
| **Total mass of (A), (B), and (C)** | | **g** | **88** | **88** | **88** | **88** | **88** | **65** | **95** | **71.5** | **81.5** | **100** |
| **Mass of (A) when total mass of (A), (B) and (C) is 100 g** | | **g** | **22.7** | **22.7** | **22.7** | **22.7** | **22.7** | **30.8** | **21.1** | **14.0** | **24.5** | **20.0** |
| **Evaluation results** | **Fluidity at 25°C** | **-** | **A** | **A** | **A** | **B** | **C** | **C** | **A** | **B** | **C** | **B** |
| | **Fluidity at 80°C** | **-** | **A** | **A** | **A** | **A** | **A** | **A** | **A** | **A** | **A** | **A** |
| | **Adhesion** | **-** | **A** | **A** | **A** | **A** | **A** | **A** | **A** | **B** | **A** | **A** |

**Table 1-2**

| | | **Unit** | **Ex. 11** | **Ex. 12** | **Ex. 13** | **Ex. 14** | **Ex. 15** | **Ex. 16** | **Ex. 17** | **Comp. Ex. 1** | **Comp. Ex. 2** | **Comp. Ex. 3** |
|---|---|---|---|---|---|---|---|---|---|---|---|---|
| **Modified polyolefin resin composition** | | **-** | **(k)** | **(l)** | **(m)** | **(n)** | **(o)** | **(p)** | **(q)** | **-** | **-** | **(r)** |
| **Acid-modified polyolefin resin (A)** | **MPO-1** | **g** | **20** | **20** | **20** | **20** | **20** | **20** | **20** | **20** | **20** | **-** |
| | **MPO-2** | **g** | **-** | **-** | **-** | **-** | **-** | **-** | **-** | **-** | **-** | **-** |
| | **CPO-1** | **g** | **-** | **-** | **-** | **-** | **-** | **-** | **-** | **-** | **-** | **-** |
| **Polyetheramine (B)** | **Jeffamine M-2070 (MW = 2000, HLB value = 13.8)** | **g** | **8** | **8** | **8** | **8** | **8** | **8** | **8** | **-** | **-** | **8** |
| | **Jeffamine M-1000 (MW = 1000, HLB value = 16.1)** | **g** | **-** | **-** | **-** | **-** | **-** | **-** | **-** | **-** | **-** | **-** |
| | **Jeffamine M-2005 (MW = 2000, HLB value = 2.7)** | **g** | **-** | **-** | **-** | **-** | **-** | **-** | **-** | **-** | **-** | **-** |
| | **Number of primary amino groups** | **Num. of groups** | **1** | **1** | **1** | **1** | **1** | **1** | **1** | **-** | **-** | **1** |
| | **Number of secondary amino groups** | **Num. of groups** | **0** | **0** | **0** | **0** | **0** | **0** | **0** | **-** | **-** | **0** |
| | **Polypropylene glycol: Sanix PP-200 (Mn = 200, hydroxyl value = 560 mgKOH/g)** | **g** | **40** | **-** | **-** | **-** | **-** | **-** | **40** | **60** | **60** | **60** |
| | **Polypropylene glycol: Sanix PP-400 (Mn = 400, hydroxyl value = 280 mgKOH/g)** | **g** | **-** | **40** | **40** | **40** | **40** | **40** | **-** | **-** | **-** | **-** |
| | **Polypropylene glycol: Sanix PP-1000 (Mn = 1000, hydroxyl value = 112 mgKOH/g)** | **g** | **32** | **-** | **-** | **-** | **-** | **-** | **-** | **-** | **-** | **-** |
| | **Polyester polyol: Kuraray Polyol P-510 (Mn = 500, hydroxyl value = 224 mgKOH/g)** | **g** | **-** | **32** | **-** | **-** | **-** | **-** | **-** | **-** | **-** | **-** |
| | **Polyester polyol: Kuraray Polyol F-510 (Mn = 500, hydroxyl value = 336 mgKOH/g)** | **g** | **-** | **-** | **32** | **-** | **-** | **-** | **-** | **-** | **-** | **-** |
| **Polyol component (C)** | **Polyester polyol: Kuraray Polyol P-2050 (Mn = 2000, hydroxyl value = 56 mgKOH/g)** | **g** | **-** | **-** | **-** | **32** | **-** | **-** | **-** | **-** | **-** | **-** |
| | **Polycaprolactone polyol: Placcel 205U (Mn = 530, hydroxyl value = 212 mgKOH/g)** | **g** | **-** | **-** | **-** | **-** | **32** | **-** | **-** | **-** | **-** | **-** |
| | **Polycarbonate polyol: Kuraray Polyol C-590 (Mn = 500, hydroxyl value = 224 mgKOH/g)** | **g** | **-** | **-** | **-** | **-** | **-** | **32** | **-** | **-** | **-** | **-** |
| | **Polyhydric alcohol: 3-methyl-1,5-pentanediol (Mn = 91, hydroxyl value = 1230 mgKOH/g)** | **g** | **-** | **-** | **-** | **-** | **-** | **-** | **32** | **-** | **-** | **-** |
| **Surfactant** | **Nonionic surfactant: polyoxyethylene alkyl ether (Mn = 1050, HLB value = 15.3)** | **g** | **-** | **-** | **-** | **-** | **-** | **-** | **-** | **-** | **8** | **-** |
| **Mass of (B) when (A) is 100 g** | | **g** | **40** | **40** | **40** | **40** | **40** | **40** | **40** | **0** | **0** | **-** |
| **Mass of (A) when (C) is 100 g** | | **g** | **27.8** | **27.8** | **27.8** | **27.8** | **27.8** | **27.8** | **27.8** | **33.3** | **33.3** | **-** |
| **Total mass of (A), (B), and (C)** | | **g** | **100** | **100** | **100** | **100** | **100** | **100** | **100** | **90** | **80** | **68** |
| **Mass of (A) when total mass of (A). (B) and (C) is 100 g** | | **g** | **20.0** | **20.0** | **20.0** | **20.0** | **20.0** | **20.0** | **20.0** | **25.0** | **22.7** | **0.0** |
| **Evaluation results** | **Fluidity at 25°C** | **-** | **B** | **A** | **A** | **B** | **A** | **A** | **A** | **D** | **D** | **A** |
| | **Fluidity at 80°C** | **-** | **A** | **A** | **A** | **A** | **A** | **A** | **A** | **D** | **D** | **A** |
| | **Adhesion** | **-** | **A** | **A** | **A** | **A** | **A** | **A** | **B** | **Not evaluable** | **Not evaluable** | **C** |

### Discussion of Results in Table 1

As shown in Table 1, the modified polyolefin resin compositions (a) to (q) obtained in Examples 1 to 17 maintained fluidity immediately after production, and were confirmed to have good adhesion to the PP (polypropylene) bumper substrates. On the other hand, in Comparative Example 1, since the polyetheramine (B) was not used, the resin precipitated, and it was not possible to produce a modified polyolefin resin composition itself. In Comparative Example 2, the polyetheramine (B) was not used, and polyethylene alkyl ether was used as a nonionic surfactant; however, as in Comparative Example 1, the resin precipitated, and it was not possible to produce a modified polyolefin resin composition itself. The modified polyolefin resin composition (k) obtained in Comparative Example 3 resulted in significantly inferior adhesion because the acid-modified polyolefin resin (A) was not used.

The present invention provides an invention with the following aspects.
Item 1. A modified polyolefin resin composition comprising an acid-modified polyolefin resin (A), a polyetheramine (B), and a polyol component (C).
Item 2. The modified polyolefin resin composition according to Item 1, wherein the acid-modified polyolefin resin (A) is contained in an amount of generally 5 to 100 parts by mass, preferably 10 to 90 parts by mass, more preferably 12.5 to 80 parts by mass, even more preferably 15 to 70 parts by mass, still more preferably 20 to 60 parts by mass, and particularly preferably 25 to 50 parts by mass, per 100 parts by mass of the polyol component (C).
Item 3. The modified polyolefin resin composition according to Item 1, wherein the polyetheramine (B) is contained in an amount of generally 5 to 100 parts by mass, preferably 10 to 90 parts by mass, more preferably 12.5 to 80 parts by mass, even more preferably 15 to 70 parts by mass, still more preferably 20 to 60 parts by mass, and particularly preferably 25 to 50 parts by mass, per 100 parts by mass of the acid-modified polyolefin resin (A).
Item 4. The modified polyolefin resin composition according to any one of Items 1 to 3, wherein the polyetheramine (B) has a polyether chain, and the polyether chain has a structure comprising at least one selected from the group consisting of:
   a chain represented by -(O-CH₂CH₂)x-, wherein x is an integer of 2 to 120,
   a chain represented by -(O-CH₂CH(CH₃))y₁-, wherein y₁ is an integer of 2 to 90,
   a chain represented by -(O-CH₂CH₂CH₂)y₂-, wherein y₂ is an integer of 2 to 90,
   a chain represented by -(O-CH₂CH₂CH₂CH₂)z₁-, wherein z₁ is an integer of 2 to 80,
   a chain represented by -(O-CH(CH₃)CH₂CH₂)z₂-, wherein z₂ is an integer of 2 to 80,
   a chain represented by -(O-CH₂CH(CH₃)CH₂)z₃-, wherein z₃ is an integer of 2 to 80, and
   a chain represented by -(O-CH₂CH₂CH(CH₃))z₄-, wherein z₄ is an integer of 2 to 80.
Item 5. The modified polyolefin resin composition according to any one of Items 1 to 4, wherein the polyetheramine (B) has a primary amino group or a secondary amino group at one end thereof, and the polyetheramine (B) has a weight average molecular weight (Mw) of 200 to 50000.
Item 6. The modified polyolefin resin composition according to any one of Items 1 to 5, wherein the polyol component (C) comprises at least one polyol selected from the group consisting of polyether polyols, polyester polyols, polyacrylate polyols, polycaprolactone polyols, polycarbonate polyols, castor oil-modified polyols, polyolefin polyols, and polyhydric alcohols.
Item 7. The modified polyolefin resin composition according to any one of Items 1 to 6, wherein the polyol component (C) comprises a polyol having a number average molecular weight (Mn) of 5000 or less.
Item 8. The modified polyolefin resin composition according to any one of Items 1 to 7, wherein the polyetheramine (B) has a polyether chain, and the polyether chain has a structure comprising at least one selected from the group consisting of:
   a chain represented by -(O-CH₂CH₂)x-, wherein x is an integer of 2 to 120,
   a chain represented by -(O-CH₂CH(CH₃))y₁-, wherein y₁ is an integer of 2 to 90, and
   a chain represented by -(O-CH₂CH₂CH₂CH₂)z₁-, wherein z₁ is an integer of 2 to 80.
Item 9. The modified polyolefin resin composition according to any one of Items 1 to 8, wherein the acid-modified polyolefin resin (A) is contained in an amount of preferably 5 to 60 parts by mass, more preferably 10 to 40 parts by mass, even more preferably 15 to 35 parts by mass, and still more preferably 18 to 30 parts by mass, per 100 parts by mass of the modified polyolefin resin composition.
Item 10. The modified polyolefin resin composition according to any one of Items 1 to 9, wherein the polyetheramine (B) has a primary amino group at one end thereof, and the polyetheramine (B) has a weight average molecular weight (Mw) of 500 to 5000.
Item 11. The modified polyolefin resin composition according to any one of Items 1 to 10, wherein the polyetheramine (B) has a HLB value of preferably 2 to 19, more preferably 5 to 18, and even more preferably 8 to 17.
Item 12. The modified polyolefin resin composition according to any one of Items 1 to 11, wherein the polyetheramine (B) is contained in an amount of preferably 1 to 40 parts by mass, more preferably 1.5 to 30 parts by mass, even more preferably 2 to 20 parts by mass, and still more preferably 3 to 15 parts by mass, per 100 parts by mass of the modified polyolefin resin composition.
Item 13. The modified polyolefin resin composition according to any one of Items 1 to 12, wherein the polyol contained in the polyol component (C) has a number average molecular weight (Mn) of preferably 60 or more and 5000 or less, more preferably 80 or more and 2000 or less, even more preferably 110 or more and 1500 or less, and still more preferably 150 or more and 1000 or less.
Item 14. The modified polyolefin resin composition according to any one of Items 1 to 13, wherein the polyol component (C) comprises at least one polyol selected from the group consisting of polyether polyols, polyester polyols, polyacrylate polyols, polycaprolactone polyols, polycarbonate polyols, and polyhydric alcohols.
Item 15. The modified polyolefin resin composition according to any one of Items 1 to 14, wherein the polyol component (C) comprises:
   a single polyether polyol;
   two or more polyether polyols with different hydroxyl values;
   a polyether polyol and a polyester polyol;
   a polyether polyol and a polycaprolactone polyol;
   a polyether polyol and a polycarbonate polyol; or
   a polyether polyol and a polyhydric alcohol.
Item 16. The modified polyolefin resin composition according to any one of Items 6 to 15, wherein the polyether polyol is preferably at least one selected from the group consisting of polyethylene glycol, polypropylene glycol, and polytetramethylene glycol; more preferably polyethylene glycol, polypropylene glycol, or polytetramethylene glycol; and even more preferably polypropylene glycol.
Item 17. The modified polyolefin resin composition according to any one of Items 1 to 16, wherein the polyol contained in the polyol component (C) has a hydroxyl value of preferably 50 to 1250 mgKOH/g, more preferably 100 to 1000 mgKOH/g, even more preferably 150 to 800 mgKOH/g, and still more preferably 200 to 600 mgKOH/g.
Item 18. The modified polyolefin resin composition according to any one of Items 1 to 17, wherein the polyol component (C) is contained in an amount of preferably 10 to 90 parts by mass, more preferably 20 to 80 parts by mass, even more preferably 30 to 70 parts by mass, and still more preferably 35 to 65 parts by mass, per 100 parts by mass of the modified polyolefin resin composition.
Item 19. The modified polyolefin resin composition according to any one of Items 1 to 18, wherein the total content ratio of the acid-modified polyolefin resin (A), the polyetheramine (B), and the polyol component (C) to the total mass of the modified polyolefin resin composition is preferably in the order of more than 50 mass%, 55 mass% or more, 60 mass% or more, 65 mass% or more, 70 mass% or more, 75 mass% or more, 80 mass% or more, 85 mass% or more, 90 mass% or more, 92.5 mass% or more, 95 mass% or more, 97.5 mass% or more, 99 mass% or more, 99.5 mass% or more, 99.9 mass% or more, 99.95 mass% or more, and 99.99 mass% or more.
Item 20. The modified polyolefin resin composition according to any one of Items 1 to 19, further comprising a polyisocyanate compound.
Item 21. A cured product obtained by curing the modified polyolefin resin composition of any one of Items 1 to 20.
Item 22. An ink comprising the modified polyolefin resin composition of any one of Items 1 to 20.
Item 23. An adhesive comprising the modified polyolefin resin composition of any one of Items 1 to 20.
Item 24. A primer comprising the modified polyolefin resin composition of any one of Items 1 to 20.
Item 25. A paint comprising the modified polyolefin resin composition of any one of Items 1 to 20.
Item 26. An in-mold coating paint comprising the modified polyolefin resin composition of any one of Items 1 to 20.

## Claims

1. A modified polyolefin resin composition comprising an acid-modified polyolefin resin (A), a polyetheramine (B), and a polyol component (C).

2. The modified polyolefin resin composition according to claim 1, wherein the acid-modified polyolefin resin (A) is contained in an amount of 5 to 100 parts by mass per 100 parts by mass of the polyol component (C).

3. The modified polyolefin resin composition according to claim 1, wherein the polyetheramine (B) is contained in an amount of 5 to 100 parts by mass per 100 parts by mass of the acid-modified polyolefin resin (A).

4. The modified polyolefin resin composition according to claim 1, wherein the polyetheramine (B) has a polyether chain, and the polyether chain has a structure comprising at least one selected from the group consisting of:
a chain represented by -(O-CH₂CH₂)x-, wherein x is an integer of 2 to 120,
a chain represented by -(O-CH₂CH(CH₃))y₁-, wherein y₁ is an integer of 2 to 90,
a chain represented by -(O-CH₂CH₂CH₂)y₂-, wherein y₂ is an integer of 2 to 90,
a chain represented by -(O-CH₂CH₂CH₂CH₂)z₁-, wherein z₁ is an integer of 2 to 80,
a chain represented by -(O-CH(CH₃)CH₂CH₂)z₂-, wherein z₂ is an integer of 2 to 80,
a chain represented by -(O-CH₂CH(CH₃)CH₂)z₃-, wherein z₃ is an integer of 2 to 80, and
a chain represented by -(O-CH₂CH₂CH(CH₃))z₄-, wherein z₄ is an integer of 2 to 80.

5. The modified polyolefin resin composition according to claim 1, wherein the polyetheramine (B) has a primary amino group or a secondary amino group at one end thereof, and the polyetheramine (B) has a weight average molecular weight (Mw) of 200 to 50000.

6. The modified polyolefin resin composition according to claim 1, wherein the polyol component (C) comprises at least one polyol selected from the group consisting of polyether polyols, polyester polyols, polyacrylate polyols, polycaprolactone polyols, polycarbonate polyols, castor oil-modified polyols, polyolefin polyols, and polyhydric alcohols.

7. The modified polyolefin resin composition according to claim 1, wherein the polyol component (C) comprises a polyol having a number average molecular weight (Mn) of 5000 or less.

8. The modified polyolefin resin composition according to claim 1, further comprising a polyisocyanate compound.

9. A cured product obtained by curing the modified polyolefin resin composition of any one of claims 1 to 8.

10. An ink comprising the modified polyolefin resin composition of any one of claims 1 to 8.

11. An adhesive comprising the modified polyolefin resin composition of any one of claims 1 to 8.

12. A primer comprising the modified polyolefin resin composition of any one of claims 1 to 8.

13. A paint comprising the modified polyolefin resin composition of any one of claims 1 to 8.

14. An in-mold coating paint comprising the modified polyolefin resin composition of any one of claims 1 to 8.
